# EUROPEAN PATENT SPECIFICATION

(11) **EP 3 216 665 B1**
(45) Date of publication and mention of the grant of the patent: **17.04.2019**
(21) Application number: 15866994.5
(22) Date of filing: 23.10.2015
(51) Int. Cl.: B60T 7/12, B60W 40/10

(54) **VEHICLE CONTROL DEVICE**
FAHRZEUGSTEUERSYSTEM
DISPOSITIF DE COMMANDE DE VÉHICULE

(30) Priority: 03.11.2014 JP 2014223863
(43) Date of publication of application: 13.09.2017
(73) Proprietor: Robert Bosch GmbH, 70442 Stuttgart (DE)
(72) Inventor: MIKAMI, Shingo, Yokohama-shi Kanagawa 2248501 (JP)
(86) International application number: PCT/IB2015/058183
(87) International publication number: WO 2016/092385

(56) References cited:
- WO-A2-2009/129467
- DE-A1-102012 206 147
- JP-A- 2007 253 936
- JP-A- 2009 168 232
- JP-A- 2012 057 707
- US-A1- 2011 046 829
- US-A1- 2013 297 159
- US-A1- 2014 277 987

## Description

### Technical Field

The present invention relates to a vehicle control system configured to cause brake means to apply a braking force to a vehicle.

### Background Art

In the related art, a vehicle control system configured to cause brake means to apply a braking force to a vehicle is developed. For example, there are proposed various technologies that apply a braking force to a vehicle in a case where the vehicle exhibits unexpected behavior due to an erroneous operation and the like executed by a driver.

PTL 1 proposes an apparatus configured to operate a brake in the case where predetermined vehicle stop conditions are detected and a vehicle velocity of a predetermined value or higher is detected. PTL 1 describes that in this configuration the vehicle can be stopped even when the vehicle starts traveling in the case where, for example, the vehicle is stopped without changing a selector lever to a parking range (P position).

### Citation List

### Patent Literature

PTL 1: JP-A-2004-182118 ([0006], [0009] and the like).

DE 102012206147 A1 discloses a method for operating a drive device of a vehicle, in particular, a motor vehicle, said device having at least one electric or hydraulic machine as a drive unit. Said method consists of the following steps: determining a target drive direction that can be set by the driver of the vehicle, detecting a current direction of travel of the vehicle and comparing the current drive direction with the target drive direction that has been set, detecting the direction of action of a current drive force and comparing the direction of action with the target drive direction, if the current direction of travel deviates from the target drive direction, detecting/determining unauthorised driving of the vehicle, if the direction of action deviates from the target drive direction.

JP 2007253936 A discloses a device that immediately starts/carries out automatic brake control in the case wherein the car speed at a point in time when operation of an accelerator pedal is started is less than a predetermined low speed and the time passing from a point in time when the accelerator pedal operation is started to a point in time when the operation for returning an accelerator pedal is concluded is shorter than a predetermined time. With this structure, in the case wherein it is necessary to urgently decelerate the vehicle when the vehicle is moved in a direction opposite to the will of a driver after operating the accelerator pedal in a parking by a selection mistake of position of a shift lever, automatic brake control can be immediately started after the operation for quickly returning the accelerator pedal by the driver.

### Summary of Invention

### Technical Problem

In the meantime, a certain driver might perform the following operation prior to ideal operation timing during a travel or a temporary stop of the vehicle. Another driver may suspend a next operation during the travel or the temporary stop of the vehicle even though the ideal operation timing has passed. Accordingly, there arises a case where inconsistency occurs between a direction of travel of the vehicle and a selector position, and a load is applied to a power train. Consequently, an occurrence of engine stall or a breakage of a transmission may result.

However, in PTL 1, only the case of stop is supposed, and an operation of the selector lever while driving the vehicle is not considered.

In view of such circumstances described above, it is an object of the present invention to provide a vehicle control system capable of preventing an occurrence of the engine stall or a breakage of the transmission caused by operating the selector lever while driving the vehicle.

### Solution to Problem

A vehicle control system having the features of claim 1 is provided

In this manner, since the velocity reducing control that causes the brake means to apply the braking force is executed in the case where the measured direction of travel is different from the tendency of behavior corresponding to the selector position and the measured traveling velocity is larger than the first threshold value, the vehicle is operated in a direction of reducing the traveling velocity larger than the first threshold value under the state in which inconsistency occurs between the direction of travel of the vehicle and the selector position. Accordingly, an occurrence of the engine stall or a breakage of the transmission caused by the operation of the selector lever while driving the vehicle is prevented.

In addition, preferably, In this configuration, a driver is capable of stopping the vehicle immediately as needed.

By maintaining the traveling velocity of the vehicle at a substantially constant value, the driver is allowed to predict behavior of the vehicle accurately and easily, and hence is allowed to achieve an adequate appreciation of the situation and a driving operation to be executed subsequently.

In this configuration, the velocity reducing control is continued as-is in the case where the traveling velocity of the vehicle is close to the target value, and hence behavior of the vehicle is stabilized.

Preferably, the brake control means delays at least one of the time of commencement of connection of a clutch and the time of shifting a variable speed gear with respect to the case where the velocity reducing control is not executed in the case where the velocity reducing control is in execution. By delaying the time of commencement of connection or the time of shifting, a deceleration effect of the vehicle owing to the velocity reducing control is achieved to an extent corresponding to the delayed time, and probability of preventing the occurrence of the engine stall or the breakage of the transmission is further increased.

Preferably, the brake control means executes the velocity reducing control while throwing out the clutch in the case where the traveling velocity is larger than a second threshold value which is larger than the first threshold value. In contrast, preferably, the brake control means executes the velocity reducing control while engaging the clutch in the case where the absolute value of the traveling velocity is larger than the first threshold value and is not larger than the second threshold value which is larger than the first threshold value.

By delaying the time of commencement of lock, a deceleration effect of the vehicle is achieved owing to the velocity reducing control to an extent corresponding to the delayed time, and probability of preventing the occurrence of the engine stall or the breakage of the transmission is further increased.

By providing the velocity reducing control with a hysteresis characteristic, the vehicle during travel can be introduced into a stop state further smoothly.

Preferably, the brake means is further provided.

### Advantageous Effects of Invention

According to the vehicle control system of the present invention, since the velocity reducing control that causes the brake means to apply a braking force is executed in the case where the measured direction of travel is different from the tendency of behavior corresponding to the selector position and the measured traveling velocity is larger than the first threshold value, the vehicle is operated in a direction of reducing the traveling velocity larger than the threshold value under the state in which inconsistency occurs between the direction of travel of the vehicle and the selector position. Accordingly, an occurrence of the engine stall or a breakage of the transmission caused by the operation of the selector lever while driving the vehicle is prevented.

### Brief Description of Drawings

Fig. 1 is a schematic block diagram illustrating a configuration of a vehicle behavior stabilization apparatus as a vehicle control system according to this embodiment.
Fig. 2 is a schematic perspective plan view of a vehicle provided with the vehicle behavior stabilization apparatus illustrated in Fig. 1 mounted thereon.
Fig. 3 is a flowchart to be provided for describing an operation of the vehicle behavior stabilization apparatus in Fig. 1 and Fig. 2 .
Fig. 4 is a time chart illustrating a first operation example.
Fig. 5 is a time chart illustrating a second operation example.
Fig. 6 is a time chart illustrating a third operation example.
Fig. 7 is a time chart illustrating a fourth operation example.
Fig. 8 is a time chart illustrating a fifth operation example.
Fig. 9 is a time chart illustrating a sixth operation example.

### Description of Embodiments

Hereinafter, a suitable embodiment of a vehicle control system of the present invention is exemplified and will be described with reference to attached drawings.

### [Configuration of a Vehicle Behavior Stabilization Apparatus 10]

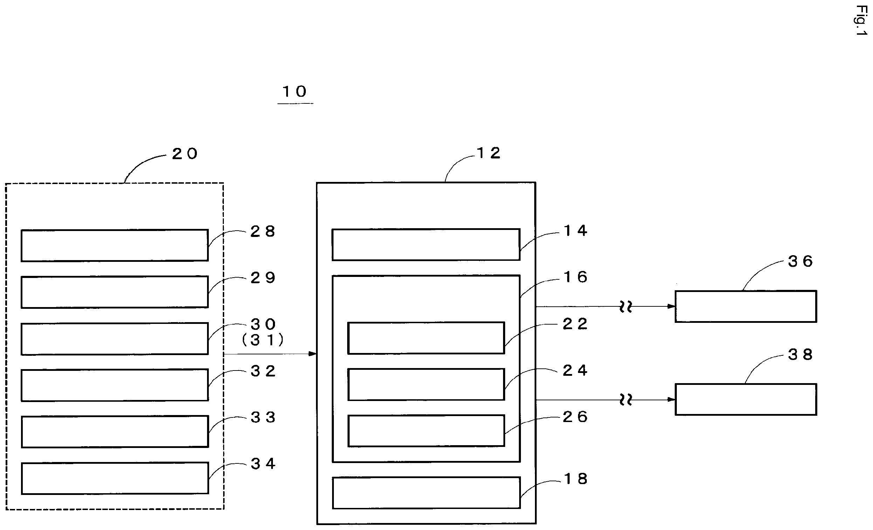

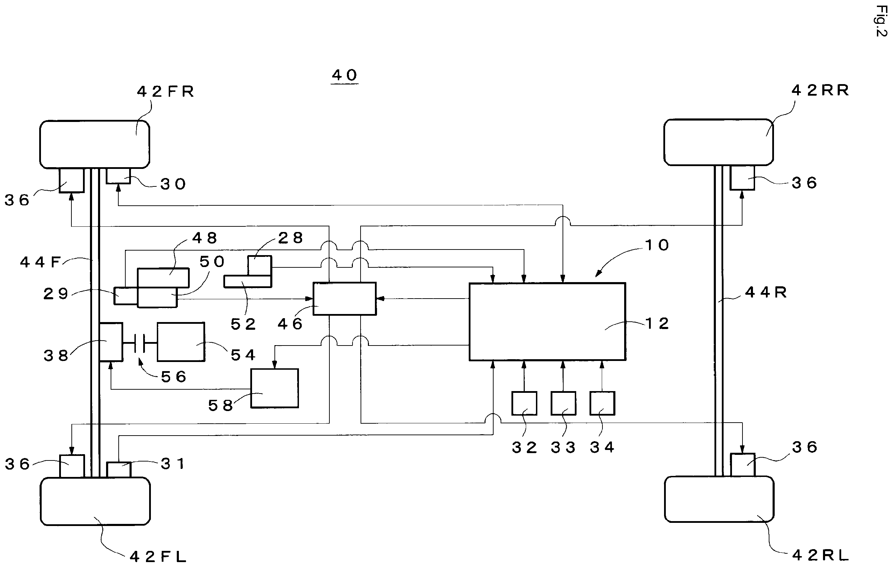

Fig. 1 is a schematic block diagram illustrating a configuration of a vehicle behavior stabilization apparatus 10 as a vehicle control system according to this embodiment. The vehicle behavior stabilization apparatus 10 includes an electronic control unit (Hereinafter, referred to as ESP-ECU 12) configured to execute various types of control relating to behavior of a vehicle 40 (Fig. 2, Fig. 4 to Fig. 9). Here, the ESP (Electronic Stability Program) corresponds to a system configured to detect current behavior of the vehicle 40 and automatically controls a traveling state of the vehicle 40 on the basis of a result of the detection, thereby stabilizing behavior of the vehicle 40.

The ESP-ECU 12 (brake control means) is a calculator including a microcomputer or the like. In this embodiment, the ESP-ECU 12 functions as an input/output unit 14, an operation unit 16, and a memory unit 18.

Respective signals from a sensor group 20 described later are input to the ESP-ECU 12 via the input/output unit 14. Respective signals from the ESP-ECU 12 are output toward an external apparatus via the input/output unit 14. The input/output unit 14 is provided with an A/D conversion circuit, which is not illustrated, configured to convert an input analogue signal to a digital signal.

The operation unit 16 is capable of realizing respective functions of a data acquiring unit 22, a necessity determination unit 24, and a control signal generating unit 26 by reading out and executing a program memorized in the memory unit 18. Alternatively, the program may be supplied from outside via a radio communication apparatus (mobile phones, smart phones, and the like), not illustrated.

The memory unit 18 includes a RAM (Random Access Memory) configured to memorize detected data converted into a digital signal, temporary data to be used for various computation processes and the like, and a ROM (Read Only Memory) configured to memorize execution programs, tables, maps, and the like.

The vehicle behavior stabilization apparatus 10 includes a plurality of sensors, and further includes the sensor group 20 electrically connected to the ESP-ECU 12. The sensor group 20 specifically includes a selector position sensor 28 (position detection means), a cylinder pressure sensor 29, two wheel velocity sensors 30, 31 (travel measurement means), a forward and reverse acceleration sensor 32, a yaw rate sensor 33, and a steering angle sensor 34. The type and the number of the sensors are not limited to those in the example illustrated in Fig. 1, and it is needless to say that various configurations may be employed.

The vehicle behavior stabilization apparatus 10 further includes a wheel cylinder 36 (brake means) configured apply a braking force to a wheel 42FR (Fig. 2) and the like, and a transmission 38 configured to transmit a drive force to the wheel 42FR and the like. The transmission 38 includes a parking lock mechanism (not illustrated) configured to mechanically lock a rotation of a front axle 44F (the same drawing). Examples of types of the transmission 38 which may be employed include an automatic transmission (AT), a continuously variable transmission (CVT), and a dual clutch transmission (DCT).

### [Perspective plan view of Vehicle 40]

Fig. 2 is a schematic perspective plan view of the vehicle 40 provided with the vehicle behavior stabilization apparatus 10 illustrated in Fig. 1 mounted thereon. The vehicle 40 as a four-wheel vehicle includes the wheel 42FR (front right wheel), a wheel 42FL (front left wheel), a wheel 42 RR (rear right wheel), and a wheel 42RL (rear left wheel). The front axle 44F rotatably supports the wheels 42FR, 42FL via a shaft. A rear axle 44R rotatably supports the wheels 42RR, 42RL via a shaft.

One each of the wheel cylinders 36 configured to generate a braking force is provided on the wheels 42FR, 42FL, 42RR, 42RL. The braking forces (braking hydraulic pressures) of the respective wheel cylinders 36 are independently controlled by a hydraulic pressure control system 46.

The hydraulic pressure control system 46 generates a braking hydraulic pressure in accordance with a depressed amount of a brake pedal 48 and/or a command value output from the ESP-ECU 12 and outputs the same toward the respective wheel cylinders 36. A master cylinder 50 is an apparatus configured to convert the depressed amount of the brake pedal 48 into the braking hydraulic pressure, and pump the braking hydraulic pressure to the hydraulic pressure control system 46. The cylinder pressure sensor 29 configured to detect an internal pressure of the master cylinder 50 is provided at a position in the vicinity of the master cylinder 50.

A selector lever 52 is an apparatus configured to select one selector position from among a plurality of the selector positions in accordance with an operation executed by an occupant (specifically a driver). The selector position sensor 28 configured to detect the selector position selected in accordance with the operation of the selector lever 52 is provided at a position in the vicinity of the selector lever 52.

A drive force is transmitted from an engine 54 to the two wheels 42FR, 42FL via the transmission 38. A clutch 56 is interposed between the engine 54 and the transmission 38 so as to mechanically connect the both or cancel the connection (that is, disconnect) therebetween. The remaining wheels 42RR, 42RL function as driven wheels that are rotated by the travel of the vehicle 40.

An ECU (hereinafter, referred to as TM-ECU 58) configured to govern automatic transmission control of the vehicle 40 is electrically connected to the transmission 38. The TM-ECU 58 outputs an instruction signal for instructing a gear change operation of the transmission 38, a starting/terminating operation of the parking lock, and a connecting/disconnecting operation of the clutch 56 in accordance with a control signal from the ESP-ECU 12.

The configuration of the vehicle 40 is not limited to the example illustrated in Fig. 2, and it is needless to say that various configurations may be employed. For example, as a drive system of the vehicle 40, a rear-wheel drive configured to drive rear wheels or four-wheel drive configured to drive four wheels may be employed in addition to the front-wheel drive described above. The clutch 56 may be interposed between the transmission 38 and the front axle 44F, or may be configured integrally with the transmission 38.

### [Operation of Vehicle Behavior Stabilization Apparatus 10]

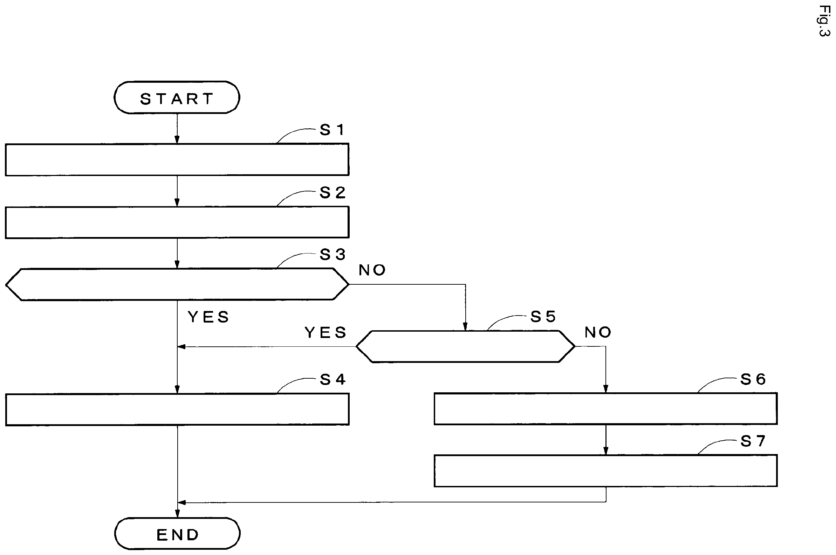

Subsequently, an operation of the vehicle behavior stabilization apparatus 10 illustrated in Fig. 1 and Fig. 2 will be briefly described with reference to a flowchart in Fig. 3. Here, "velocity reducing control" that prevents an occurrence of engine stall or a breakage of the transmission 38 by suppressing the travel of the vehicle 40 to a low speed will be mainly described.

S1: detection of selector position
S2: direction of travel and measurement of traveling velocity of vehicle are measured
S3: Does it match tendency of behavior corresponding to selector position?
S4: determined as "not necessary"
S5: |V| ≤ Vth?
S6: determined as "necessary"
S7: execute velocity reducing control

In Step S1, the selector position sensor 28 detects a selector position that the selector lever 52 instructs and outputs as a detection signal. For example, one of six selector positions, "P" (parking range), "R" (reverse range), "N" (neutral range), "D" (drive range), "2" (second range) or "L" (low range) is detected. The ESP-ECU 12 acquires a detection signal from the selector position sensor 28 via the input/output unit 14, and temporarily saves the detection signal in the memory unit 18.

In Step S2, the wheel velocity sensors 30, 31 measure the direction of travel and the traveling velocity of the vehicle 40, and output the same as a measurement signal. When the velocity with reference sign is defined as V, the direction of travel corresponds to a sign of "V", and the traveling velocity corresponds to an "absolute value of V, hereinafter, expressed as |V|".

For example, in a case where the wheel velocity sensors 30, 31 are composed of absolute-type rotary encoders, the direction of travel and the traveling velocity can be measured simultaneously. One of states of "forward travel", "reverse travel", and "stop" is detected as the direction of travel. The ESP-ECU 12 acquires measurement signals from the wheel velocity sensors 30, 31 via the input/output unit 14, and save the measured signals temporarily in the memory unit 18.

In the meantime, the ESP-ECU 12 may acquire a signal output from the sensor group 20 as needed synchronously or asynchronously with execution processes of Steps S1 and S2. Specifically, an internal pressure of the master cylinder 50 from the cylinder pressure sensor 29, a forward and reverse acceleration from the forward and reverse acceleration sensor 32, a yaw rate from the yaw rate sensor 33, and a steering angle from the steering angle sensor 34 and the like are exemplified.

In Step S3, the necessity determination unit 24 performs a determination process on behavior consistency of the vehicle 40. Here, the term "behavior consistency" means an attribute relating to whether or not the direction of travel measured in Step S2 matches the tendency of behavior corresponding to the selector position detected in Step S1. Prior to the determination process, the data acquiring unit 22 acquires the selector position, the direction of travel, and the traveling velocity by reading out the same from the memory unit 18. At this time, an average value of the velocities obtained from the wheels 42FR, 42FL, which are the driving wheels may be calculated as the traveling velocity.

Subsequently, the necessity determination unit 24 determines the behavior consistency of the vehicle 40 by using different conditions of determination according to the direction of travel of the vehicle 40. As a specific example of "behavior inconsistency conditions" which are conditions having no behavior consistency, cases of [1] "forward travel" and "R", [2] "reverse travel" and "D", [3] "forward travel" and "P", [4] "reverse travel" and "P" are exemplified.

More specifically, the necessity determination unit 24 determines that the direction of travel matches the tendency of behavior in the case where the selector position is in a range aiming at a forward travel (specifically, "D", "2", or "L") under the condition that the direction of travel of the vehicle 40 is "forward travel", and that the direction of travel is different from the tendency of behavior in the other cases ("P", "R", or "N"). Alternatively, the necessity determination unit 24 determines that the direction of travel of the vehicle 40 matches the tendency of behavior in the case where the selector position is in a range aiming at reverse travel (specifically, "R") under the condition that the direction of travel of the vehicle 40 is "reverse travel", and that the direction of travel is different from the tendency of behavior in the other cases ("P", "N", "D", "2" or "L").

In the example described above, it is determined that the direction of travel of the vehicle 40 is different from the tendency of behavior that comes up when the selector position is "N" under the condition that the direction of travel of the vehicle 40 is "forward travel" or "reverse travel". However, determination that the direction of travel matches the tendency of behavior is also applicable.

In the case where the both are determined to match (Step S3: YES), the necessity determination unit 24 determines that the velocity reducing control for the vehicle 40 is "not necessary" (Step S4). In contrast, in the case where the both are determined to be different (Step S3: NO), it is determined that the "behavior inconsistency conditions" is satisfied, and the procedure proceeds to the next step (S5).

In Step S5, the necessity determination unit 24 executes a process of determination relating to a magnitude relation between a traveling velocity |V| and a threshold value Vth (first threshold value). Here, an arbitrary positive value or zero value may be selected as the threshold value Vth. However, the threshold value Vth may be set to a crawling velocity at which the vehicle 40 can stop immediately (for example, Vth = 10 [kph]).

Specifically, in the case where a relationship |V| ≤ Vth is satisfied, (Step S5: YES), the necessity determination unit 24 determines that the velocity reducing control for the vehicle 40 is "not necessary" (Step S4). In contrast, in the case where a relationship |V| > Vth is satisfied (Step S5: NO), the necessity determination unit 24 is determined that the velocity reducing control for the vehicle 40 is "necessary" (Step S6).

In Step S7, the ESP-ECU 12 executes an operation of the velocity reducing control for the vehicle 40. Specifically, a control signal generating unit 26 generates a control signal indicating a command value for the hydraulic pressure control system 46. Subsequently, the ESP-ECU 12 outputs the command value toward the hydraulic pressure control system 46. The hydraulic pressure control system 46 generates a braking hydraulic pressure in accordance with the input command value and outputs the same toward the respective wheel cylinders 36. In this manner, the vehicle behavior stabilization apparatus 10 applies the braking force on the vehicle 40 to reduce the traveling velocity |V| of the vehicle 40 to a value close to the threshold value Vth or smaller.

Simultaneously or apart therefrom, the control signal generating unit 26 generates a control signal for instructing connection/disconnection of the clutch 56, shifting of the variable speed gear, and start/termination of the parking lock. Subsequently, the TM-ECU 58 receives an instruction from the ESP-ECU 12 and outputs instruction signals to the clutch 56 or the transmission 38. In this manner, the vehicle behavior stabilization apparatus 10 connects/disconnects the clutch 56 at adequate timing, shifts the variable speed gear, or starts/terminates the parking lock.

In this manner, the operation of the vehicle behavior stabilization apparatus 10 relating to the velocity reducing control is terminated. By an adequate velocity reducing control is realized by executing the flowchart illustrated in Fig. 3 continuously or intermittently and sequentially.

For example, in the case where an operation of the selector lever 52 by the driver is effected during execution of the velocity reducing control and the behavior inconsistency conditions are not satisfied any longer, the ESP-ECU 12 terminates the velocity reducing control.

In the case where an operation of the brake pedal 48 by the driver is effected during execution of the velocity reducing control, the ESP-ECU 12 may output a larger one of [1] a braking hydraulic pressure corresponding to the velocity reducing control and [2] a braking hydraulic pressure corresponding to the depressed amount of the brake pedal 48.

### [Specific Cases of Velocity Reducing Control]

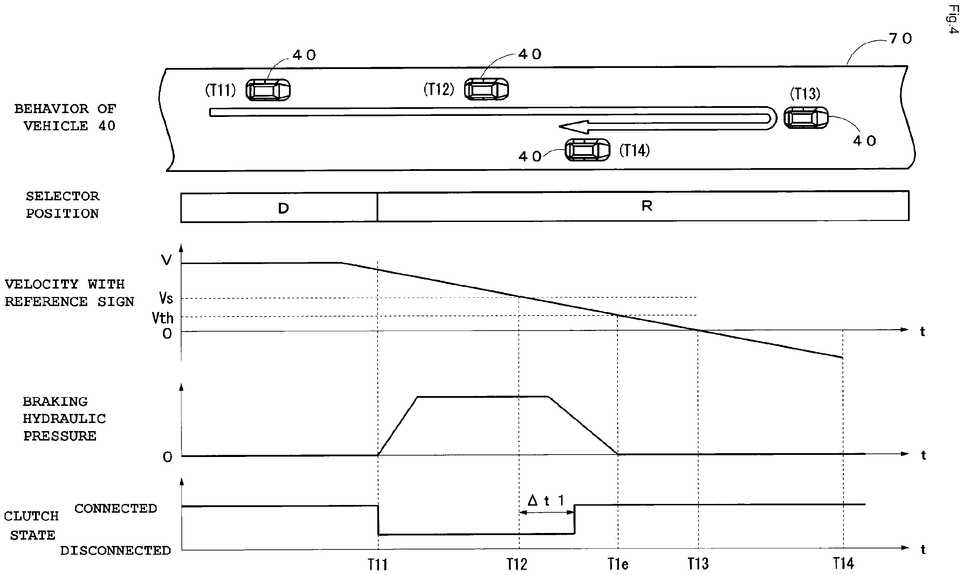

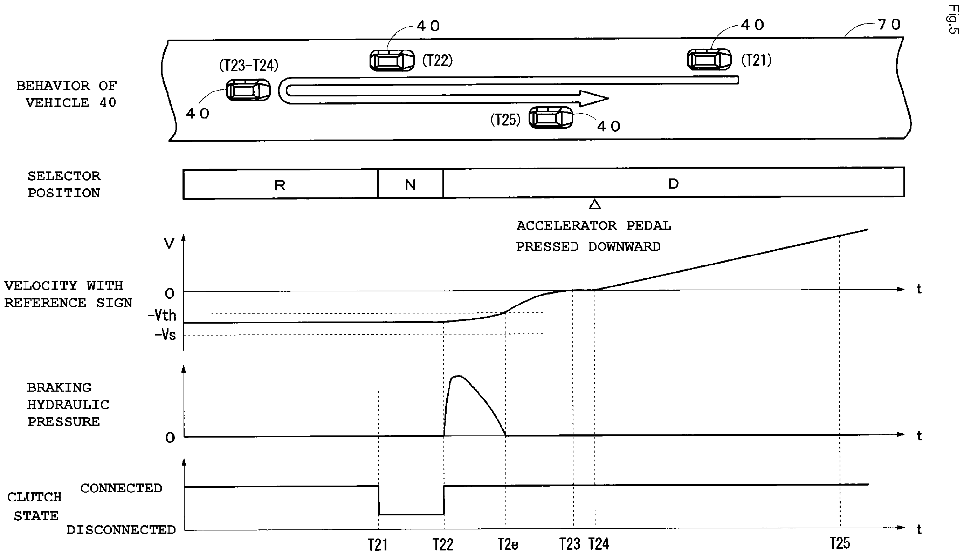

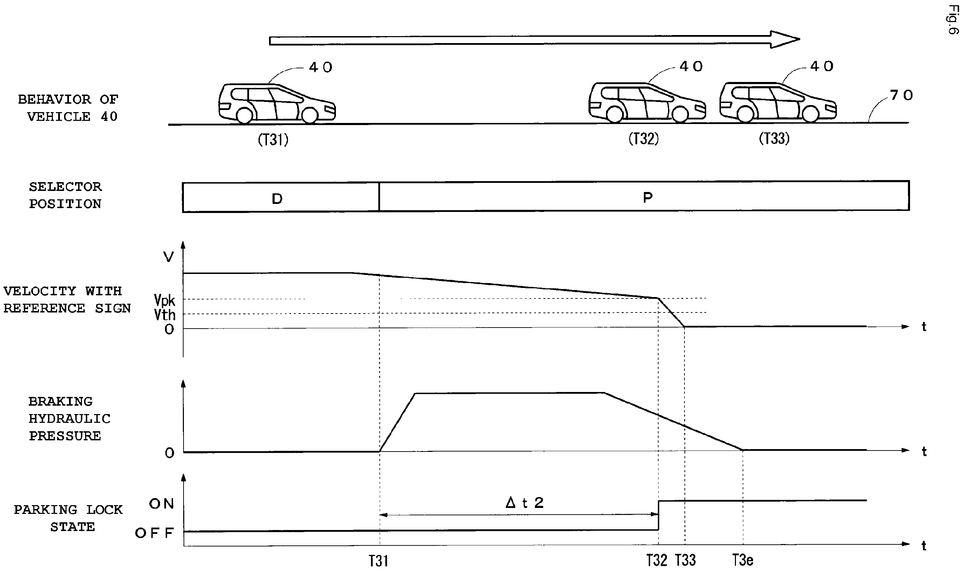

Subsequently, specific cases of the above-described velocity reducing control described above (first to sixth operation examples) will be described with reference to Fig. 4 to Fig. 9. All of Fig. 4 to Fig. 9 include a time chart indicating a temporal sequence of behavior of the vehicle 40, a selector position, a velocity with reference sign V, and the braking hydraulic pressure in this order from the top. Behavior of the vehicle 40 is schematically illustrated in plan views in Fig. 4 and Fig. 5, and in side views in Fig. 6 to Fig. 9 respectively. As regards the velocity with reference sign V, the direction of forward travel of the vehicle 40 is defined to be "positive" and the direction of reverse travel of the vehicle 40 is defined to be "negative".

### <First Operation Example>

As illustrated in Fig. 4, a driver assumes a case where the driver operates the selector lever 52 at a time t = T11 aiming at an immediate change in direction and shifts the selector position from "D" to "R". In this case, the vehicle 40 travels forward on a flat road 70, performs a change in direction at the time t = T13, and travels reversely on the road 70.

In a time zone of t < T11, the vehicle 40 travels forward at the traveling velocity |V| (> Vs; stall limit velocity; second threshold value) without operation of the brake under the condition that the selector position is "D". Here, a stall limit velocity Vs (> Vth) corresponds to a lower limit velocity which causes engine stall in a case where the above-described behavior inconsistency conditions are satisfied and the clutch 56 is in a "connected" state.

At the time t = T11, the selector position is changed from "D" to "R". At this time, the ESP-ECU 12 satisfies the behavior inconsistency conditions and the |V| > Vth simultaneously, and hence starts the velocity reducing control for the vehicle 40. The ESP-ECU 12 outputs a control signal indicating that the clutch state is translated to "disconnected" toward the TM-ECU 58 in the case where the velocity reducing control is started. Accordingly, the state of the clutch 56 is translated temporarily from "connected" to "disconnected". As descried later, in the case where the velocity reducing control is in execution, an attention should be paid to a point that the ESP-ECU 12 delays the time of commencement of connection of the clutch 56 with respect to the case where the control is not in execution.

In the time zone of T11 < t < T1e, the ESP-ECU 12 executes the velocity reducing control for the vehicle 40 continuously while disconnecting the clutch 56. Specifically, the ESP-ECU 12 sequentially outputs command values that changes the braking hydraulic pressure arbitrarily toward the hydraulic pressure control system 46. Consequently, the vehicle 40 travels forward while decelerating in accordance with application of the braking force.

At the time t = T12 (< T1e), the vehicle 40 satisfies a relationship of |V| = Vs, and then travels further forward while decelerating. Here, when |V| < Vs is satisfied, the ESP-ECU 12 outputs a control signal indicating that the clutch 56 is translated to the "connected" state to the TM-ECU 58 after Δt1 (predetermined time) has elapsed from the time t = T12, for example. Accordingly, the state of the clutch 56 is translated from "disconnected" to "connected". In this manner, by delaying the time of commencement of connection, a deceleration effect of the vehicle 40 is achieved owing to the velocity reducing control to an extent corresponding to the delayed time, and probability of preventing the occurrence of the engine stall or the breakage of the transmission 38 is further increased.

Since |V| ≤ Vth is satisfied for the first time at the time t = T1e, the ESP-ECU 12 terminates the velocity reducing control for the vehicle 40. A creeping force is applied to vehicle 40 instead of the braking force applied by the velocity reducing control.

Subsequently, the vehicle 40 stops temporarily as a result of reducing the traveling velocity |V| to |V| = 0 (at the time t = T13), and travels with the tendency of behavior corresponding to "R" (that is, in the direction of reverse travel) in the time zone of T13 < t ≤ T14. In this manner, the driver is capable of translating the operation to the next operation (reverse traveling operation) smoothly even in the case where the selector lever 52 is operated prior to ideal operation timing (when the vehicle 40 is stopped) while the vehicle 40 travels forward.

In the example described above, the case of delaying the time of commencement of connection of the clutch 56 has been described. However, simultaneously, or apart therefrom, the same advantageous effects are obtained even though the time of shifting (shifting time) the variable speed gear of the transmission 38 from "D" to "P" is delayed.

### <Second Operation Example>

As illustrated in Fig. 5, a case where the driver operates the selector lever 52 at the times t = T21, T22 aiming at an immediate change in direction and sequentially shifts the selector position from [1] "R" to "N", [2] "N" to "D" is assumed. In this case, the vehicle 40 travels reversely on the flat road 70, executes a change in direction at the times t = T23 to T24, and travels forward on the road 70.

In the time zone of t < T21, the vehicle 40 travels reversely at the traveling velocity |V| (here, Vth < |V| < Vs), without operation of the brake under the state in which the selector position is "R". At the time t = T21, the selector position is changed from "R" to "N", and the state of the clutch 56 is translated from "connected" to "disconnected". An attention is payed to a point that the velocity reducing control is not executed in the case where the selector position is "N", that is, in the time zone of T21 < t < T22.

At the time t = T22, the selector position is changed from "N" to "D". Here, under the condition that |V| < Vs is satisfied, the ESP-ECU 12 outputs a control signal indicating that the clutch 56 is translated to the "connected" state to the TM-ECU 58. Accordingly, the state of the clutch 56 is translated from "disconnected" to "connected". At this time, the ESP-ECU 12 satisfies the behavior inconsistency conditions and the |V| > Vth simultaneously, and hence starts the velocity reducing control for the vehicle 40.

In the time zone of T22 < t < T2e, the ESP-ECU 12 executes the velocity reducing control for the vehicle 40 continuously while connecting the clutch 56. Specifically, the ESP-ECU 12 sequentially outputs command values that changes the braking hydraulic pressure arbitrarily toward the hydraulic pressure control system 46. Consequently, the vehicle 40 travels reversely while decelerating in accordance with application of the braking force.

Since |V| ≤ Vth is satisfied for the first time at the time t = T2e, the ESP-ECU 12 terminates the velocity reducing control for the vehicle 40. Then, a creeping force is applied to vehicle 40 instead of the braking force of the velocity reducing control. The vehicle 40 reduces the traveling velocity |V| to |V| = 0 (the time t = T23), and stops temporarily.

At the time t = T24, the driver presses the accelerator pedal, not illustrated, downward with the selector position remained at "D". Accordingly, the vehicle 40 travels with the tendency of behavior (that is, the direction of forward travel) corresponding to "D" in the time zone of T24 < t ≤ T25. In this manner, the driver is capable of translating the operation to the next operation (forward travel operation) smoothly even in the case where the selector lever 52 is operated prior to ideal operation timing (when the vehicle 40 is stopped) while the vehicle 40 travels reversely.

### <Third Operation Example>

As illustrated in Fig. 6, a case where the driver operates the selector lever 52 at the time t = T31 while aiming at an immediate stop, and shifts the selector position from "D" to "P" is assumed. In this case, the vehicle 40 travels forward on the flat road 70, and stops at the time t = T33.

In the time zone of t < T31, the vehicle 40 travels forward at the traveling velocity |V| (> Vpk: parking lock allowable velocity: third threshold value) without operation of the brake under the state in which the selector position is "D". Here, the parking lock allowable velocity Vpk corresponds to a velocity which allows translation to an "ON" state without breakage of the parking lock mechanism, more specifically, a state in which the parking lock pole is fitted to the parking lock gear. In this illustrated example, Vpk > Vth is satisfied. However, an arbitrary positive value may be set.

At the time t = T31, the selector position is changed from "D" to "P". At this time, the ESP-ECU 12 satisfies the behavior inconsistency conditions and the |V| > Vth simultaneously, and hence starts the velocity reducing control for the vehicle 40. The ESP-ECU 12 temporarily holds the state translation of the parking lock mechanism, not illustrated, the parking lock is maintained in an "OFF" state. In other words, in the case where the velocity reducing control is in execution, an attention should be paid to a point that the ESP-ECU 12 delays the time of commencement of lock of the parking lock mechanism with respect to the case where the control is not executed.

In the time zone of T31 < t < T32, the ESP-ECU 12 continues to execute the velocity reducing control for the vehicle 40. Specifically, the ESP-ECU 12 sequentially outputs command values that changes the braking hydraulic pressure arbitrarily toward the hydraulic pressure control system 46. Consequently, the vehicle 40 travels forward while decelerating in accordance with application of the braking force.

At the time t = T32, the ESP-ECU 12 satisfies |V| ≤ Vpk for the first time when Δt2 (predetermined time) has elapsed from the time t = T31, and hence outputs a control signal indicating that the parking lock is translated to the "ON" state to the TM-ECU 58. Accordingly, the state of the parking lock mechanism is translated from "OFF" to "ON".

In this manner, by delaying the time of commencement of lock, a deceleration effect of the vehicle 40 is achieved owing to the velocity reducing control to an extent corresponding to the delayed time, and probability of preventing the occurrence of the engine stall or the breakage of the transmission 38 is further increased. For example, in the case where the selector position is "P" and the velocity reducing control is in execution, the time when |V| = Vpk is satisfied may be determined as the time of commencement of lock.

In the time zone of T32 < t < T33, the vehicle 40 decelerates abruptly by application of a braking force by the parking lock mechanism and the velocity reducing control, and finally stops (the time t = T33). Here, the ESP-ECU 12 executes the velocity reducing control for the vehicle 40 on the premise that the state of the parking lock maintains the "OFF" state. Accordingly, an attention is paid on a point that the braking hydraulic pressure is continuously generated until the time t = T3e is reached even after the vehicle 40 is stopped (the time t = T33).

In this manner, the driver is capable of translating the operation to the next operation (stop operation) smoothly even in the case where the selector lever 52 is operated prior to ideal operation timing (when the vehicle 40 is stopped) while the vehicle 40 travels forward.

In the example described above, a case where the parking lock allowable velocity Vpk satisfies Vpk > 0 is assumed. However, it may be set to Vpk = 0. At this time, the ESP-ECU 12 executes the velocity reducing control continuously for the vehicle 40, and after the vehicle 40 has completely stopped (|V| = 0), the state of the parking lock is translated from "OFF" to "ON".

The velocity reducing control described above is applicable also for a configuration that the time of commencement of lock cannot be delayed by electronic control, specifically, for the transmission 38 having the mechanically-operated parking lock mechanism. In this case, the lock operation and the velocity reducing control are executed simultaneously, and the vehicle 40 is stopped in a rapid manner, so that the transmission 38 is protected.

### <Fourth Operation Example>

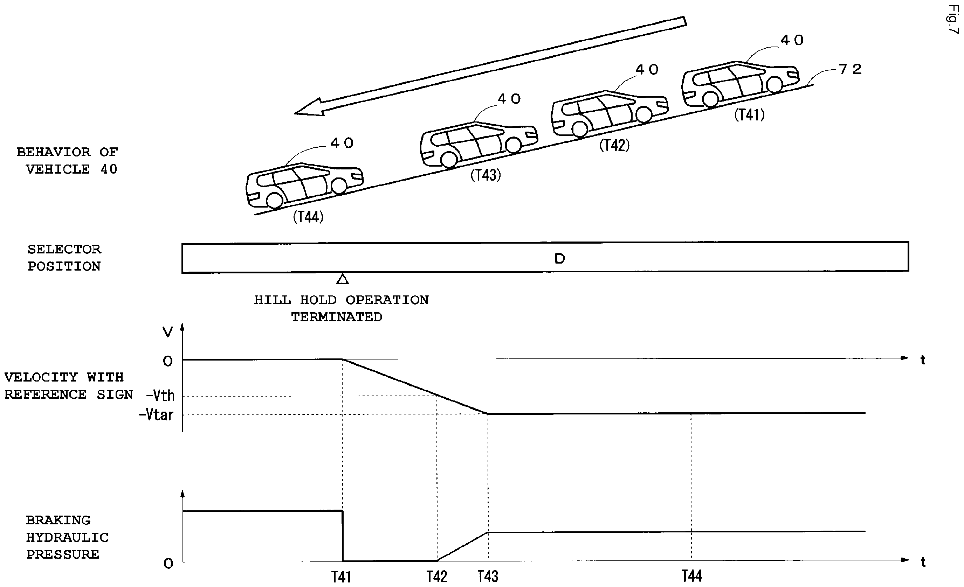

As illustrated in Fig. 7, a case where the driver terminates a hill hold operation at the time t = T41 aiming at reverse travel using a gradient, and then waits without pressing the accelerator pedal, not illustrated, downward is assumed. In this case, the vehicle 40 starts reverse travel (that is, reverse hill-descending) along an uphill road 72 under its own weight.

In the time zone t < T41, the ESP-ECU 12 executes the hill hold operation under the state in which the selector position is "D". Specifically, the ESP-ECU 12 sequentially outputs command values that maintain the braking hydraulic pressure constantly toward the hydraulic pressure control system 46. Consequently, the vehicle 40 maintains the stop state in accordance with application of the braking force.

At the time t = T41, the hill hold operation by the ESP-ECU 12 is terminated. Accordingly, the vehicle 40 which has lost the braking force starts reverse hill-descending under its own weight, and then travels reversely while accelerating gradually (the time zone of T41 < t < T42).

At the time t = T42, the ESP-ECU 12 satisfies the behavior inconsistency conditions and the |V| > Vth simultaneously for the first time, and hence starts the velocity reducing control for the vehicle 40.

In the time zone of T42 < t ≤ T44, the ESP-ECU 12 continues to execute the velocity reducing control for the vehicle 40. Specifically, the ESP-ECU 12 increases the braking hydraulic pressure with an elapse of time and then sequentially outputs command values that maintain the braking hydraulic pressure at a constant value toward the hydraulic pressure control system 46. Consequently, after the traveling velocity |V| has reached a target value Vtar (the time t = T43), the vehicle 40 travels reversely at a substantially constant traveling velocity (|V| = Vtar). Here, the target value Vtar corresponds to a target value Vtar of the traveling velocity |V| in the velocity reducing control and, in this illustration, is a value larger than the threshold value Vth. As a method of controlling the braking hydraulic pressure, various known automatic control methods including PID control may be employed.

Subsequently, in the case where |V| ≤ Vth is satisfied by the braking operation or the like executed by the driver, the ESP-ECU 12 terminates the velocity reducing control for the vehicle 40.

In this manner, the ESP-ECU 12 may continue to execute the velocity reducing control for bringing the traveling velocity |V| close to the target value Vtar (>Vth). By maintaining the traveling velocity |V| of the vehicle 40 at a substantially constant value, the driver is allowed to predict behavior of the vehicle 40 accurately and easily, and hence is allowed to achieve an adequate appreciation of the situation and a driving operation to be executed subsequently.

The threshold value Vth is preferably a crawling velocity at which the vehicle 40 can stop immediately. In this configuration, the driver is capable of stopping the vehicle 40 immediately as needed.

The case where the hill hold operation is executed is assumed in the example described above, even though the hill hold operation is not executed, the ESP-ECU 12 may execute the velocity reducing control for the vehicle 40.

### <Fifth Operation Example>

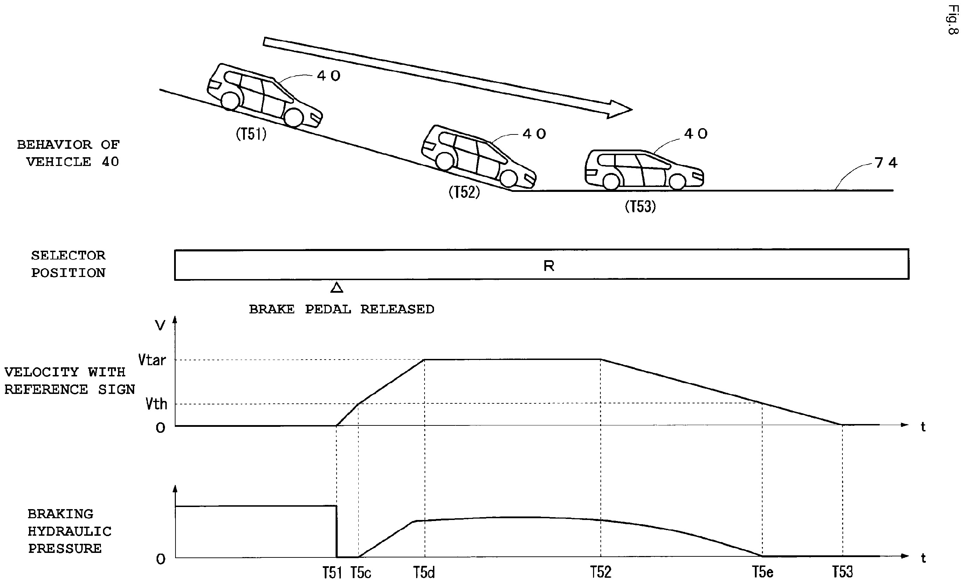

As illustrated in Fig. 8, a case where the driver releases the brake pedal 48 at the time t = T51 aiming at forward travel by using the gradient is assumed. In this case, the vehicle 40 starts forward travel (that is, forward hill-descending) along the downhill road 74 under its own weight.

In the time zone t < T51, under the state in which the selector position is "R", the braking hydraulic pressure in accordance with the depressed amount of the brake pedal 48 is generated on the respective wheel cylinders 36. Consequently, the vehicle 40 maintains the stop state in accordance with application of the braking force.

At the time t = T51, the braking operation is terminated in accordance with a release of the brake pedal 48 by the driver. Accordingly, the vehicle 40 which has lost the braking force starts forward hill-descending under its own weight, and then travels forward while accelerating gradually (time zone of T51 < t < T5c).

At the time t = T5c, the ESP-ECU 12 satisfies the behavior inconsistency conditions and the |V| > Vth simultaneously for the first time, and hence starts the velocity reducing control for the vehicle 40.

In the time zone of T5c < t ≤ T5d, the ESP-ECU 12 continues to execute the velocity reducing control for the vehicle 40. Since the braking force is applied to the vehicle 40 here, an attention is paid to a point that an increasing rate (gradient of a graph) of the traveling velocity V is smaller than that in the time zone of T51 ≤ t ≤ T5c.

At the time t = T5d, the vehicle 40 satisfies a relationship of |V| = Vtar, and then travels further forward while maintaining the target value Vtar. At this time, the ESP-ECU 12 sequentially outputs command values of the braking hydraulic pressure for maintaining the traveling velocity |V| constantly toward the hydraulic pressure control system 46. The target value Vtar is an arbitrary value that satisfies Vth < Vtar < Vs. Accordingly, even though the clutch 56 is still in the "connected" state, an occurrence of the engine stall can be prevented.

At the time t=T52, the vehicle 40 reaches an end of the downhill, and subsequently, travels forward on a flat portion (time zone of T52 < t < T5e). Since |V| ≤ Vth is satisfied for the first time at the time t = T5e, the ESP-ECU 12 terminates the velocity reducing control for the vehicle 40. Alternatively, even in the case where |V| ≤ Vth is satisfied by the braking operation or the like executed by the driver, the ESP-ECU 12 terminates the velocity reducing control for the vehicle 40.

In the time zone of T5e < t < T53, the vehicle 40 travels forward while decelerating as a result of application of a creeping force, and finally stops (the time t = T53). In this manner, the ESP-ECU 12 sets the target value Vtar to an arbitrary value larger than the threshold value Vth, and executes the velocity reducing control for bringing the traveling velocity |V| close to the target value Vtar.

In fourth and fifth operation examples, the case of Vtar > Vth has been mainly described. However, the target value Vtar may take various values including the same as and different from the threshold value Vth irrespective of the magnitude relationship between the target value Vtar and the threshold value Vth. Specifically, since the velocity reducing control continues as is in the case where the traveling velocity V is a value in the vicinity of the target value Vtar by continuously executing the velocity reducing control that brings the traveling velocity V close to the target value Vtar while satisfying a relationship of Vtar > Vth, behavior of the vehicle 40 is stabilized.

### <Sixth Operation Example>

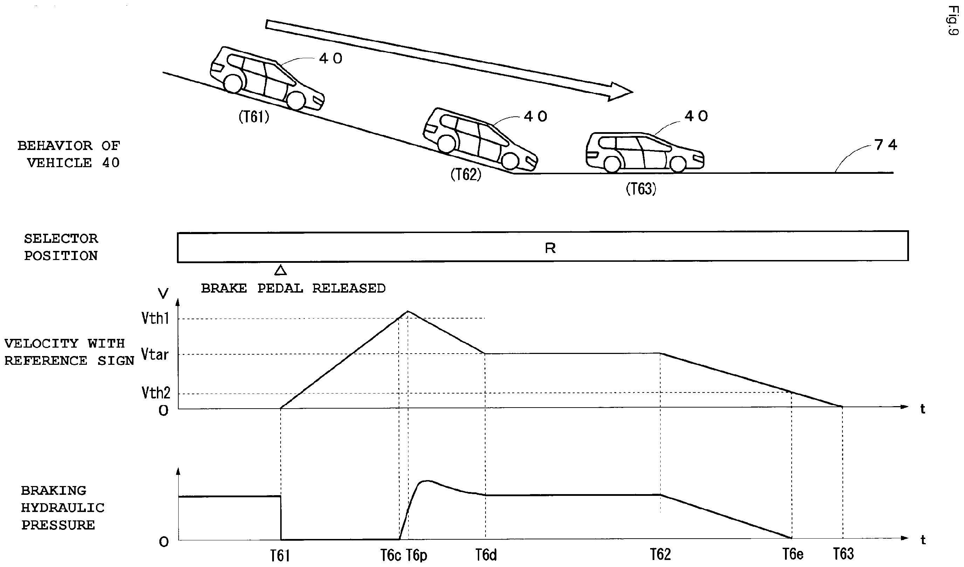

As illustrated in Fig. 9, a case where the driver releases the brake pedal 48 at the time t = T61 aiming at forward travel by using the gradient is assumed. In this case the vehicle 40 starts the forward hill-descending in the same manner as the fifth example described above (see Fig. 8).

In the time zone t < T61, under the state in which the selector position is "R", the braking hydraulic pressure in accordance with the depressed amount of the brake pedal 48 is generated on the respective wheel cylinders 36. Consequently, the vehicle 40 maintains the stop state in accordance with application of the braking force.

At the time t = T61, the braking operation is terminated in accordance with a release of the brake pedal 48 by the driver. Accordingly, the vehicle 40 which has lost the braking force starts forward hill-descending under its own weight, and then travels forward while accelerating gradually (time zone of T61 < t < T6c).

At the time t = T6c, the ESP-ECU 12 satisfies the behavior inconsistency conditions and |V| > Vth1 simultaneously for the first time, and hence starts the velocity reducing control for the vehicle 40. Here, a first velocity threshold value Vth1 (first threshold value) is a threshold value for determining the time of commencement of the velocity reducing control, and is smaller than the stall limit velocity Vs.

In the time zone of T6 < t ≤ T6d, the ESP-ECU 12 continues to execute the velocity reducing control for the vehicle 40. Since the braking force is applied to the vehicle 40 here, attention is paid to a point that the traveling velocity V is gradually reduced from a peak at the time t = T6p (T6c < T6p < T6d).

At the time t = T6d, the vehicle 40 satisfies a relationship of |V| = Vtar, and then travels forward while maintaining the target value Vtar. At this time, the ESP-ECU 12 sequentially outputs command values of the braking hydraulic pressure for maintaining the traveling velocity |V| constantly toward the hydraulic pressure control system 46. Here, the target value Vtar is an arbitrary value that satisfies Vth2 ≤ Vtar ≤ Vth1. A second velocity threshold value Vth2 (fourth threshold value) is a threshold value for determining the time of termination of the velocity reducing control, and is smaller than the first velocity threshold value Vth1.

At the time t=T62, the vehicle 40 reaches an end of the downhill, and subsequently, travels forward on a flat portion (time zone of T62 < t < T6e). Since |V| ≤ Vth2 is satisfied for the first time at the time t = T6e, the ESP-ECU 12 terminates the velocity reducing control for the vehicle 40.

In the time zone of T6e < t < T63, the vehicle 40 travels forward while decelerating as a result of application of a creeping force, and finally stops (the time t = T63). In this manner, the ESP-ECU 12 may stop the velocity reducing control in execution in the case where the traveling velocity |V| is smaller than the second velocity threshold value Vth2 (<Vth1). By providing the velocity reducing control with a hysteresis characteristic, the vehicle 40 during travel can be introduced into a stop state further smoothly.

### [Advantageous Effects of Vehicle Behavior Stabilization Apparatus 10]

As described thus far, the vehicle behavior stabilization apparatus 10 includes the selector position sensor 28 (position detection means) configured to detect a selector position selected in accordance with an operation of a selector lever 52, wheel velocity sensors 30, 31 (travel measurement means) configured to measure the direction of travel and the traveling velocity |V| of the vehicle 40, and the ESP-ECU 12 (brake control means) configured to execute the velocity reducing control that applies the braking force with the wheel cylinders 36 in the case where the measured direction of travel is different from the tendency of behavior corresponding to the detected selector position and the measured traveling velocity |V| is larger than the threshold value Vth.

In this configuration, the vehicle 40 operates in the direction of reducing the traveling velocity |V| larger than the threshold value Vth under the state in which inconsistency occurs between the direction of travel of the vehicle 40 and the selector position. Accordingly, an occurrence of the engine stall or a breakage of the transmission 38 caused by the operation of the selector lever 52 while driving the vehicle 40 is prevented.

For example, in this embodiment, a four-wheel vehicle is exemplified as one mode of the vehicle 40 for description. However, a motorcycle or a three-wheel vehicle are also applicable. In other words, the present invention can be applied as long as vehicles which can be traveled by driving wheels.

### Reference Signs List

10... vehicle behavior stabilization apparatus (vehicle control system)
12... ESP-ECU (brake control means)
14... input/output unit, 16... operation unit
18... memory unit, 20... sensor group
28... selector position sensor (position detection means)
30, 31... wheel velocity sensors (travel measurement means)
36... wheel cylinder (brake means)
38... transmission
40... vehicle, 42FR (FL, RR, RL)... wheel
46... hydraulic pressure control system
48... brake pedal
50... master cylinder, 52... selector lever
54... engine
56... clutch
58... TM-ECU
70, 72, 74... road
Vpk... parking lock allowable velocity (third threshold value)
Vs... stall limit velocity (second threshold value)
Vtar... target value
Vth... threshold value (first threshold value), Vth1... first velocity threshold value (first threshold value)
Vth2... second velocity threshold value (fourth threshold value)

## Claims

1. A vehicle control system (10) configured to cause brake means (36) to apply a braking force to a vehicle, comprising:
position detection means (28) configured to detect a selector position selected in accordance with an operation of a selector lever (52);
travel measurement means (30, 31) configured to measure a direction of travel and a traveling velocity (|V|) of the vehicle; and
brake control means (12) configured to, when the selector lever (52) is shifted from one selector position corresponding to a current direction of travel of the vehicle to another selector position corresponding to an opposite direction of the current direction in a situation in which the vehicle travels forward or backward, execute velocity reducing control which causes the brake means (36) to apply the braking force in the case where the direction of travel measured by the travel measurement means (30, 31) is different from the direction of travel corresponding to the selector position detected by the position detection means (28), and an absolute value of the traveling velocity (|V|) measured by the travel measurement means (30, 31) is larger than a first threshold value (Vth).

2. The vehicle control system according to Claim 1, wherein the brake control means (12) delays at least one of a time of commencement of connection of a clutch (56) and a time of shifting of a variable speed gear with respect to a case where the velocity reducing control is not executed in the case where the velocity reducing control is in execution.

3. The vehicle control system according to Claim 1 or 2, wherein the brake control means (12) executes the velocity reducing control while throwing out a clutch (56) in the case where the absolute value of the traveling velocity (|V|) is larger than a second threshold value (Vs) which is larger than the first threshold value (Vth).

4. The vehicle control system according to Claim 1 or 2, wherein the brake control means (12) executes the velocity reducing control while engaging the clutch (56) in the case where the absolute value of the traveling velocity (|V|) is larger than the first threshold value (Vth) and is not larger than a second threshold value (Vs) which is larger than the first threshold value (Vth).

5. The vehicle control system according to any one of Claims 1 to 4, further including the brake means (36).

## Patentansprüche

1. Fahrzeugsteuersystem (10), das dazu ausgelegt ist, ein Bremsmittel (36) zu veranlassen, eine Bremskraft auf ein Fahrzeug anzuwenden, und das Folgendes umfasst:
ein Positionserkennungsmittel (28), das dazu ausgelegt ist, eine Wählelementposition zu erkennen, die gemäß einer Operation eines Wählhebels (52) ausgewählt wurde;
ein Fahrmessmittel (30, 31), das dazu ausgelegt ist, eine Fahrtrichtung und eine Fahrgeschwindigkeit (|V|) des Fahrzeugs zu messen; und
ein Bremssteuermittel (12), das dazu ausgelegt ist, dann, wenn der Wählhebel (52) in einer Situation, in welcher das Fahrzeug vorwärts oder rückwärts fährt, von einer Wählhebelposition, die einer aktuellen Fahrtrichtung des Fahrzeugs entspricht, in eine andere Wählhebelposition, die einer der aktuellen Richtung entgegengesetzten Richtung entspricht, verschoben wird, eine Geschwindigkeitsreduzierungssteuerung auszuführen, die das Bremsmittel (36) veranlasst, in dem Fall, in welchem sich die von dem Fahrtmessmittel (30, 31) gemessene Fahrtrichtung von der Fahrtrichtung unterscheidet, die der von dem Positionserkennungsmittel (28) erkannten Wählhebelposition entspricht, und ein von dem Fahrmessmittel (30, 31) gemessener Wert einer Fahrgeschwindigkeit (|V|) größer als ein erster Schwellenwert (Vth) ist, die Bremskraft anzuwenden.

2. Fahrzeugsteuersystem nach Anspruch 1, wobei das Bremssteuermittel (12) mindestens eine Zeit des Beginnens des Verbindens einer Kupplung (56) oder eine Zeit des Schaltens eines Wechselgetriebes mit Bezug auf einen Fall, in dem die geschwindigkeitsreduzierende Steuerung nicht ausgeführt wird, verzögert, falls die geschwindigkeitsreduzierende Steuerung ausgeführt wird.

3. Fahrzeugsteuersystem nach Anspruch 1 oder 2, wobei das Bremssteuermittel (12) die geschwindigkeitsreduzierende Steuerung während des Ausrückens einer Kupplung (56) in dem Fall ausführt, in welchem der absolute Wert der Fahrgeschwindigkeit (|V|) größer ist als ein zweiter Schwellenwert (Vs), der größer ist als der erste Schwellenwert (Vth).

4. Fahrzeugsteuersystem nach Anspruch 1 oder 2, wobei das Bremssteuermittel (12) die geschwindigkeitsreduzierende Steuerung während des Eingreifens der Kupplung (56) in dem Fall ausführt, in welchem der absolute Wert der Fahrgeschwindigkeit (|V|) größer ist als der erste Schwellenwert (Vth) und nicht größer ist als ein zweiter Schwellenwert (Vs), der größer ist als der erste Schwellenwert (Vth).

5. Fahrzeugsteuersystem nach einem der Ansprüche 1 bis 4, das ferner das Bremsmittel (36) beinhaltet.

## Revendications

1. Système de commande de véhicule (10) configuré de manière à amener des moyens de freinage (36) à appliquer une force de freinage à un véhicule, comprenant:
des moyens de détection de position (28) configurés de manière à détecter une position de sélecteur sélectionnée selon l'actionnement d'un levier de sélecteur (52);
des moyens de mesure de déplacement (30, 31) configurés de manière à mesurer une direction de déplacement et une vitesse de déplacement (|V|) du véhicule; et
des moyens de commande de frein (12) configurés de manière à, lorsque le levier de sélecteur (52) est déplacé d'une première position de sélecteur correspondant à un sens de déplacement actuel du véhicule dans une autre position de sélecteur correspondant à un sens opposé au sens actuel dans une situation dans laquelle le véhicule se déplace vers l'avant ou vers l'arrière, exécuter une commande de réduction de vitesse qui amène les moyens de freinage (36) à appliquer la force de freinage dans le cas où la direction de déplacement mesurée par les moyens de mesure de déplacement (30, 31) est différente d'une tendance de comportement qui correspond à la position de sélecteur détectée par les moyens de détection de position (28), et où la vitesse de déplacement (|V|) mesurée par les moyens de mesure de déplacement (30, 31) est supérieure à une première valeur de seuil (Vth).

2. Système de commande de véhicule selon la revendication 1, dans lequel les moyens de commande de frein (12) retardent au moins un temps parmi un temps de commencement de connexion d'un embrayage (56) et un temps de déplacement d'un engrenage de changement de vitesse par rapport à une situation dans laquelle la commande de réduction de vitesse n'est pas exécutée dans le cas où la commande de réduction de vitesse est en cours d'exécution.

3. Système de commande de véhicule selon la revendication 1 ou 2, dans lequel les moyens de commande de frein (12) exécutent la commande de réduction de vitesse tout en rejetant un embrayage (56) dans le cas où la vitesse de déplacement (|V|) est supérieure à une seconde valeur de seuil (Vs) qui est supérieure à la première valeur de seuil (Vth).

4. Système de commande de véhicule selon la revendication 1 ou 2, dans lequel les moyens de commande de frein (12) exécutent la commande de réduction de vitesse tout en engageant l'embrayage (56) dans le cas où la vitesse de déplacement (|V|) est supérieure à la première valeur de seuil (Vth) et n'est pas supérieure à une seconde valeur de seuil (Vs) qui est supérieure à la première valeur de seuil (Vth).

5. Système de commande de véhicule selon l'une quelconque des revendications 1 à 4, comprenant en outre les moyens de freinage (36).
